# EUROPEAN PATENT APPLICATION

(11) **EP 4 422 043 A1**
(43) Date of publication of application: **28.08.2024**
(21) Application number: 23158734.6
(22) Date of filing: 27.02.2023
(51) Int. Cl.: H02M 1/00, H02M 3/00, H02M 3/335

(54) **METHOD OF OPERATING A SERIES RESONANT CONVERTER AND SERIES RESONANT CONVERTER**

(71) Applicant: Silicon Austria Labs GmbH, 8010 Graz (AT)
(72) Inventor: Langbauer, Thomas, 8042 Graz (AT); Vollmaier, Franz, 8453 St. Johann im Saggautal (AT); Connaughton, Alexander, 8020 Graz (AT)
(74) Representative: Wirnsberger & Lerchbaum Patentanwälte OG

(57) **Abstract**

The invention concerns a method of operating a series resonant converter (1), the series resonant converter (1) having a plurality of ports (2), the ports (2) being coupled together with a transformer (T) for transferring electrical power between the ports (2), the ports (2) each having a switch configuration (4) formed with a plurality of switches, a series resonant circuit (5) and a transformer terminal of the transformer (T) for controlling a port voltage (V₁, V₂, V₃) applied to the series resonant circuit (5) with switching of the switch configuration (4). To achieve a high efficiency, in particular in partial load operation, at least one of the ports (2) is operated with a duty cycle of less than 50 %.

Furthermore, the invention concerns a series resonant converter (1).

## Description

The invention concerns a method of operating a series resonant converter, the series resonant converter having a plurality of ports, the ports being coupled together with a transformer for transferring electrical power between the ports, the ports each having a switch configuration formed with a plurality of switches, a series resonant circuit and a transformer terminal of the transformer for controlling a port voltage applied to the series resonant circuit with switching of the switch configuration.

Furthermore, the invention concerns a resonant converter, wherein the series resonant converter comprises a plurality of ports being coupled to each other via a transformer for electrical power transfer between the ports, the ports each comprising a switch configuration formed with a plurality of switches, a series resonant circuit and a transformer terminal of the transformer for respectively controlling a port voltage applied to the series resonant circuit with switching of the switch configuration.

Furthermore, the invention concerns a use of a method for operating a series resonant converter and/or a series resonant converter.

Series resonant converters with a plurality of ports coupled via a transformer to transfer electrical power between the ports are known. If the series resonant converter has two ports, one of the ports is often referred to as the primary circuit and the other of the ports is often referred to as the secondary circuit. Typically, the respective port has a switch configuration formed with two half bridges, which is coupled to a series resonant circuit, the series resonant circuit being coupled to a transformer terminal of the transformer for transferring electrical power between the ports. Usually, the switch configuration in the respective port connects to a DC storage device, respectively, so that electrical power can be transferred between the DC storage devices with a power transfer between the ports.

For electrical power transfer between the ports, it is usually provided that in the respective port with alternate switching of the two half bridges with a duty cycle of 50%, a port voltage is applied to the series resonant circuit. To control the electrical power transfer, usually a frequency of the port voltages in the ports and/or a phase-shift between the port voltages of the ports is varied.

It is an object of the invention to provide a method for operating a series resonant converter which provides improved efficiency.

A further object of the invention is to provide a series resonant converter which provides improved efficiency Further, it an object of the invention to provide a corresponding use which enables improved efficiency.

To achieve the foregoing objects, the invention provides a method of operating a series resonant converter, the series resonant converter having a plurality of ports, the ports being coupled together with a transformer for transferring electrical power between the ports, the ports each having a switch configuration formed with a plurality of switches, a series resonant circuit and a transformer terminal of the transformer for controlling a port voltage applied to the series resonant circuit with switching of the switch configuration, wherein, in particular in partial load operation, at least one of the ports is operated with a duty cycle of less than 50 %.

The basis of the invention is the finding that in a partial load operation an electrical power transfer between ports of a series resonant converter with a reduction, in particular variation, of the duty cycle, which is standardly 50%, an efficiency of the electrical power transfer can be increased. It has been shown that when operating at full load, a duty cycle of 50% is usually favorable. In general, high efficiency is then present. As the electrical power transfer is reduced with respect to a full load operation, an efficiency of the electrical power transfer between the ports usually decreases. By changing the duty cycle, this can be at least partially, and preferably substantially entirely, compensated for. This is especially the case if a ratio between port voltages of ports differs from a corresponding transformer ratio of the transformer between the ports and/or voltage-time areas of the port voltages have a different magnitude considering a respective transformer ratio of the transformer. This usually results in pronounced efficiency reductions. In particular, this often results in a ratio of active power and reactive power that is associated with large transmission losses. By selecting or changing the duty cycle in at least one, preferably in several, of the ports, in particular depending on an electrical power flow of the series resonant converter, the ratio of the port voltages or the voltage-time areas of the port voltages can be adjusted. This can reduce losses or increase an efficiency. The port voltage is usually an AC voltage. The duty cycle can be less than 50 %, especially from 10 % to less than 50 %. Especially, the duty cycle can be set, in particular adjusted, to 10 % to 45 %. The duty cycle can be less than 40 %, preferably less than 35 %, in particular preferably less than 25 %, and typically greater than or equal to 10 %. The duty cycle of the respective port usually refers to the port voltage of the port.

The duty cycle usually defines at the respective port voltage the ratio of a pulse duration of a pulse of the port voltage to the period duration, usually in relation to a switching cycle of the switch configuration. Port voltage typically refers to an AC electrical voltage at an output of the switch configuration. The port voltage is usually controllable, in particular generatable and/or adjustable, with switching of the switch configuration. Usually, a switching cycle of the switch configuration is a period within which the switches of the switching configuration are alternately actuated to generate a period of port voltage. The reciprocal of the period typically defines a switching frequency of the switch configuration and/or a frequency of the port voltage. Usually, the switches of the switch configuration can be switched phase-shifted with respect to each other, and in particular with a drive frequency, in such a way that the port voltage has a predetermined duty cycle. The respective port may have a drive unit electrically connected to the switch configuration for switching the switches of the switch configuration with drive signals from the drive unit. The port voltage is typically an AC voltage at the output of the switch configuration effectuated by switching the switches of the switch configuration. The switching frequency and the duty cycle can typically be adjusted independently.

Usually, in the respective port, the switch configuration, in particular its output, is electrically connected to the series resonant circuit, so that with alternating switching of the switches of the switch configuration, a port voltage at connection points, in particular input points, of the series resonant circuit can be controlled, in particular generated and/or adjusted. The switch configuration is usually electrically coupled to the series resonant circuit via the connection points. The respective port may have an electrical intermediate circuit to which the switch configuration is electrically connected, in particular on the input side, in order to perform a transfer between an intermediate circuit DC voltage of the intermediate circuit and the port voltage by switching the switches. The intermediate circuit can have an electrical DC voltage source, which is usually electrically coupled to the switch configuration via the intermediate circuit. The switch configuration, in particular the switches thereof, are usually switchable in such a way that an electrical intermediate circuit DC voltage present at the switch configuration is transferred to an electrical port voltage and/or in the reverse manner. The port voltage is usually an AC voltage. Usually, pulses of the port voltage are essentially rectangular. Typically, the absolute value of the amplitudes of the port voltage correspond to the intermediate circuit DC voltage, in particular are equal to it. Typically, the series resonant circuit is electrically coupled to the transformer, in particular transformer port of the transformer, usually in series. As a result, an electric voltage transformation can be performed with the transformer between series resonant circuits of different ports electrically coupled to the transformer. The transformer is usually a part of the series resonant converter. The respective transformer terminal of the transformer is typically part of the respective port. The respective transformer port may have a transformer coil as part of a magnetic circuit of the transformer to inductively perform an electrical voltage transformation between the transformer coils of the transformer ports. A turn number ratio of transformer coils inductively coupled to each other usually defines the transformer transformation ratio between the corresponding ports. The turn number ratio usually refers to a ratio of a number of turns of the transformer coils inductively coupled with each other. The transformer coils of different ports may have different or the same number of turns. The transformer may have a magnetic core element through which the transformer coils of the ports are magnetically and/or inductively coupled to each other. The transformer coil of each port may be inductively coupled to the transformer coils of each of the other ports. Typically, the ports are galvanically isolated from each other by the transformer. The DC electrical power source may be a DC electrical storage device, such as a battery or an accumulator.

For example, one of the ports may be a primary port and another, in particular several more, of the ports may be secondary ports to transfer electrical power from the primary port to the secondary ports. By switching the switch configuration in the primary port, an intermediate circuit DC voltage of an intermediate circuit electrically connected to the switch configuration can be converted to a port voltage applied to the series resonant circuit. The series resonant circuit of the primary port may be inductively coupled to a respective series resonant circuit of the respective secondary port via a transformer. In the respective secondary port, a port voltage can be transferred to an intermediate circuit DC voltage of an intermediate circuit electrically connected to the switch configuration by switching the switch configuration. In this way, electrical power can be transferred from the intermediate circuit, in particular its DC voltage source, of the primary port to the respective intermediate circuit, in particular its DC voltage source, of the secondary ports. It is advantageous if the series resonant converter has at least three ports. In this way, an efficient structure for electrical power transmission can be implemented. Preferably, the series resonant converter has more than three ports. The ports can be inductively coupled to one another for electrical power transmission between the ports with one or more transformers of the series resonant converter, in particular as described. By adjusting, in particular varying, the duty cycle in at least one, preferably more, of the ports to control the series resonant converter, high efficiency can be easily achieved in a series resonant converter having at least three ports. For example, electrical power can be transmitted with high efficiency from a primary port to at least two further secondary ports in this way.

To control the series resonant converter, the duty cycle can be varied in at least one of the ports. This allows flexible control, in particular depending on the load. The duty cycle can be set, in particular varied, in one, in particular in several, preferably in all, of the ports of the series resonant converter. In this way, the port voltages can be efficiently coordinated with each other. It is advantageous if the duty cycle is varied in the port with the highest port voltage. The duty cycle in the respective port usually refers to the port voltage of the respective port.

To implement, in particular to change, the duty cycle, the switch configuration of the respective port can be switched such that the port voltage is temporarily a constant zero voltage. Typically, the respective port voltage has, usually periodically, a time range, in particular time ranges, with constant zero voltage. The port voltage can have several time ranges with a constant zero voltage within a period, in particular within a half period, of the port voltage. Accordingly, the respective port can be designed to implement a constant zero voltage of the port voltage in sections with the switch configuration. To adjust the duty cycle, a magnitude of the time range with constant zero voltage can be varied within a period, in particular within a half period, of the port voltage.

High efficiency can be achieved if the duty cycle is adjusted such that the voltage-time areas of the port voltages of a plurality of the ports when taking into account a respective transformer transformation ratio of the transformer are substantially equal. The duty cycle can be set or adjusted accordingly for one or more, preferably all, of the ports. In particular, it is achievable in this manner that the transformer is less loaded, typically driven less far toward saturation of the transformer, so that less transformer loss occurs. Such an approach is usually associated with a limitation of an electric power flow between the ports, which is why this is advantageous in particular for a partial load operation of the series resonant converter. As a result, a particularly high efficiency can be achieved in partial load operation. Usually, the voltage-time area of a port voltage in a voltage-time diagram is defined as the area between a port voltage curve and a zero line of the voltage-time diagram, where the voltage-time area usually refers to one period of the port voltage. The skilled person understands that a substantially equal size of the voltage-time areas means that the voltage-time areas are preferably equal in size, but may typically have some customary deviation from an equal size, at which deviation typically the intended purpose is achieved.

The series resonant converter can have a control device to control, in particular regulate, the duty cycle at one or more, in particular all, ports depending on the port voltages. In particular, the control, especially regulation, is performed in such a way that the voltage-time areas are substantially equal as described above. The control device may be configured to control the switch configuration accordingly. The drive unit may be part of the control device.

To control, in particular regulate, the electrical power transmission, the duty cycle as well as a frequency and/or a phase, in particular a phase angle, of the port voltage in at least one of the ports can be varied. In particular, this can be done in several, preferably all, of the ports. Typically, the frequency is set to a same level in all ports. Varying the phase usually changes a phase-shift between several of the port voltages. A control of the port voltage with switching of the switch configuration, in particular the switches of the switch configuration, of a respective port is usually a control of a transfer between an intermediate circuit DC voltage applied to the switch configuration and the port voltage of the respective port with switching of the switches of the switch configuration of the port. The intermediate circuit DC voltage is typically the intermediate circuit DC voltage of the intermediate circuit of the respective port. The port voltage of the respective port is usually applied to the series resonant circuit of the port.

It has proven useful if in at least one of the ports the duty cycle is varied, and usually a port voltage frequency of the port voltage is kept substantially constant, to control, in particular regulate, the power transfer. Typically, the port voltage frequency is set in a frequency range above a resonant frequency of the series resonant circuit, preferably in the vicinity of the resonant frequency. It may be advantageous if the port voltage frequency is set in a frequency range below a resonant frequency of the series resonant circuit, preferably in the vicinity of the resonant frequency. The port voltage frequency can be kept in the vicinity of the resonant frequency of the series resonant circuit, in particular substantially constant. In this way, a lossy enlargement of a deviation from the resonant frequency can be avoided. Generally, the port voltage frequencies are the same in all ports. Typically, the port voltage frequency of the port voltage is set in a frequency range from 10 % to 500 %, in particular from 30 % to 300 %, preferably from 40 % to 250 %, more preferably from 60 % to 150 %, especially preferably from 80 % to 120 %, of the resonant frequency of the series resonant circuit. Thus, an efficient control, in particular regulation, of an electrical power transmission is achievable. This applies to at least one, in particular several, preferably all, of the ports.

Usually, in at least one of the ports, the switch configuration is formed with a half bridge circuit. This may apply to several, in particular all, of the ports. The half bridge circuit is typically formed with two switches electrically connected in series. The two switches typically form a bridge branch. Typically, the half bridge circuit is electrically coupled to the intermediate circuit and/or the intermediate circuit DC voltage of the port, usually so that the half bridge circuit is electrically connected in parallel with the intermediate circuit DC voltage of the intermediate circuit. Usually, the series resonant circuit electrically connects to the half bridge circuit between the two switches of the half bridge circuit. The switches of the switch configuration can be implemented with the switches of the half bridge circuit. The respective switch can be formed with a transistor.

Preferably, in at least one of the ports, the switch configuration is formed with a full bridge circuit. This applies in particular to several, in particular all, of the ports. Usually, the full bridge circuit is formed with two half bridge circuits each electrically connected to the intermediate circuit and/or the intermediate circuit DC voltage of the port, with the series resonant circuit electrically connected between the half bridges. Usually, the respective half bridge circuit is electrically connected in parallel to the intermediate circuit DC voltage of the intermediate circuit. Typically, the switch configuration includes a first switch, a second switch, a third switch, and a fourth switch, with the first switch and second switch arranged in series forming a first bridge branch, and the third switch and fourth switch arranged in series forming a second bridge branch. Typically, the first switch and the third switch are electrically coupled to one pole of the intermediate circuit dc voltage and the second switch and the fourth switch are electrically coupled to the other pole of the intermediate circuit dc voltage. The first bridge branch and the second bridge branch are usually each electrically connected in parallel with the intermediate circuit DC voltage. Between the two switches of the respective bridge branch is usually the connection point to which the series resonant circuit is electrically coupled to the switch configuration. The two connection points usually represents the input points of the series resonant converter. The switches of the switch configuration can be implemented with the switches of the full bridge circuit. The respective switch can be formed with a transistor.

Usually, the switches of the respective bridge branch are switched alternately in the respective port to define the port voltage of the port. For example, the first switch and the fourth switch may be switched on temporally overlapping each other, and the second switch and the third switch may be switched on temporally overlapping each other. Drive signals, with which the respective bridge branch, in particular its switches, are controlled, are usually phase-shifted between the bridge branches by a drive angle. In this way, usually at the output of the switch configuration, the port voltage can be set with a defined duty cycle and/or a defined frequency. To generate a zero voltage of the port voltage, the switches of the bridge branches electrically coupled to the same pole of the intermediate circuit DC voltage, for example the first switch and the third switch or for example the second switch and the fourth switch, can be switched on temporally overlapping each other, in particular concurrently. In this way, the duty cycle can be easily adjusted and/or varied. At least one, in particular several, preferably all, of the ports of the series resonant converter can be implemented and/or operated in this way.

In particular as an alternative to the switch configuration with a full bridge circuit, in at least one, in particular several, preferably all, of the ports the switch configuration can be formed with, particularly by, a half bridge circuit and a control switch, wherein the half bridge circuit is electrically connected to the intermediate circuit and/or the intermediate circuit DC voltage of the port, wherein the series resonant circuit is electrically connected between the half bridge and the control switch. The series resonant circuit is usually electrically connected to the half bridge between the switches of the half bridge. The control switch can be connected on the one hand to the series resonant circuit and on the other hand between the switches of the half bridge. The half bridge circuit is typically electrically connected in parallel with the intermediate circuit DC voltage of the intermediate circuit and/or between poles of the intermediate circuit DC voltage. The switch configuration then usually has a single half bridge. The port may have a capacitor branch formed with two capacitors connected in series, wherein the capacitor branch is connected in parallel with the intermediate circuit DC voltage of the intermediate circuit or between poles of the intermediate circuit DC voltage. Usually, the series resonant circuit and/or the control switch are respectively electrically connected to the capacitor branch between the capacitors of the capacitor branch. The control switch can at one end be electrically connected to the capacitor branch between the capacitors of the capacitor branch and at the other end be electrically connected to the half bridge between the switches of the half bridge. The series resonant circuit can at one end be electrically connected to the half bridge between the switches of the half bridge and at the other end be electrically connected to the capacitor circuit between the capacitors of the capacitor branch. The control switch can be a bidirectional control switch or can be formed with, in particular by, several, usually two, unidirectional control switches connected antiserially to each other. Preferably, the bidirectional control switch is formed with, in particular by, a bidirectional control transistor or with, in particular by, several, usually two, unidirectional control transistors which are connected antiserially to each other. Antiserially connected to each other usually refers to a serial connection with opposite polarity to each other and/or back to back. The half bridge circuit and the control switch are usually formed with different switches, in particular different transistors. Typically, with switching of the control switch, a zero voltage of the port voltage can be set. The switch configuration can then be implemented according to the full bridge circuit, wherein the second half bridge circuit, in particular the third switch and the fourth switch, is replaced by the control switch.

A high efficiency of the electrical power transmission is achievable if a partial load operation of the series resonant converter, in particular in a range smaller than 60 %, preferably smaller than 30 %, in particular preferably smaller than 20 %, of a rated power of the series resonant converter is present and/or the method is applied at such a partial load operation. The partial load operation is usually in a range between 0.1 % and 90 % of the rated power of the series resonant converter. Partial load operation typically refers to operation of the series resonant converter at an electrical power transfer between the ports that is less than a rated power of the series resonant converter.

The duty cycle in the respective port can be set, in particular varied, before and/or during an electrical power transmission between several of the ports. It is advantageous if the duty cycle is set, in particular varied, in the port whose port voltage has the greatest amplitude, in particular average amplitude, in comparison between the ports, in particular as described in this document.

Preferably, in an adjustment phase of the series resonant converter, the duty cycle is varied in at least one of the ports until substantially no electrical power transfer occurs between a plurality of the ports. Preferably, following the adjustment phase, electrical power transfer can be controlled by varying a switching frequency and/or a phase of the port voltage in at least one of the ports. In this way, a favorable duty cycle can be efficiently set and an electrical power transmission can be controlled, in particular regulated, in a particularly simple manner. It is also possible to vary the duty cycle after the adjustment phase in order to control the electrical power transmission. Preferably, the above applies to several, in particular all, of the ports. The adjustment phase can be performed at the beginning of an electrical power transmission between several of the ports.

The series resonant converter usually has an electronic control device to control, in particular regulate, the series resonant converter. The electronic control device can have a microcontroller for this purpose.

The duty cycle can be set depending on the port voltages of the ports. The series resonant converter can have a measuring device for measuring the port voltage of one or more ports. The control device can be designed, in particular programmed, to set the duty cycle of the respective port depending on port voltages determined with the measuring device.

The duty cycle in the respective port can be defined depending on stored reference data. A control device of the series resonance converter can be designed, in particular programmed, for a corresponding implementation. The reference data can be stored in an electronic memory, in particular in the control device. The determination can be made as a function of a quantity of an electrical power transmission.

A high practicability is achievable if, in particular depending on an electrical power transmission, a change is made between a first operating mode and a second operating mode of the series resonant converter, wherein in the first operating mode in at least one, preferably several, of the ports the duty cycle is less than 50% and/or a variation of the duty cycle is applied, and in the second operating mode a respective duty cycle in the ports is 50%. In particular, in the first operation mode, the series resonant circuit can be operated as described in this document, in particular, the duty cycle can be set and/or varied as described in this document. The first operating mode may be applied in partial load operation of the series resonant converter, and the second operating mode may be applied in full load operation of the series resonant converter. In the first operating mode, an adjustment of a duty cycle of the port voltage in one, in particular several, ports may be performed to control an electrical power transfer. In particular, an adjustment of frequency and/or phase of the port voltages may further be performed. In the second operating mode, an electrical power transmission between ports can be performed with adaptation of a frequency and/or phase of the port voltages.

Typically, the series resonant circuit has a resonant circuit capacitance and a resonant circuit inductance and often an electrical resonant circuit resistor, which are electrically connected in series. The resonant circuit resistor may be an inherent or parasitic resistor, or it may be an individual electrical component. Usually, the resonant circuit capacitance is formed with, in particular by, a resonant circuit capacitor and the resonant circuit inductance with, in particular by, a resonant circuit coil. The resonant circuit coil may be formed with the transformer coil of the respective transformer terminal. Preferably, the series resonant circuit, in particular the resonant circuit inductance, and the transformer, in particular the transformer coil, are separate parts. In particular, the resonant circuit inductance may be provided in addition to the transformer coil. The transformer coil is usually electrically connected in series with the series resonant circuit, in particular in series with the resonant circuit capacitor and the resonant circuit coil. The resonant frequency of the series resonant circuit usually results from the resonant circuit capacitance and the resonant circuit inductance.

The series resonant converter, in particular the respective port, is usually operated with soft switching, in particular zero voltage switching (ZVS) and/or zero current switching (ZCS). To implement Zero Voltage Switching, the switch configuration, in particular its switches, are switched at a zero voltage of the port voltage. To implement zero current switching, the switch configuration, in particular its switches, are switched at zero current of a port current corresponding to the port voltage. Several of the ports, in particular all of the ports, may be operated in such a manner.

Several, in particular all, of the ports can be implemented in the same way or in an analog way. Statements in this document regarding one port, in particular regarding components of the port, apply accordingly to at least one, in particular several, preferably all, of the ports, especially their respective components, in an analogous manner.

Furthermore, the invention concerns a series resonant converter, in particular for carrying out a method described in this document, wherein the series resonant converter comprises a plurality of ports being coupled to each other via a transformer for electrical power transfer between the ports, the ports each comprising a switch configuration formed with a plurality of switches, a series resonant circuit and a transformer terminal of the transformer for respectively controlling a port voltage applied to the series resonant circuit with switching of the switch configuration, characterized in that a control device for controlling the series resonant converter is configured, in particular in partial load operation, to operate at least one of the ports with a duty cycle of less than 50%.

The series resonant converter can be implemented correspondingly or analogously to the features and effects which are described in the context of a method of operating a series resonant converter, in particular above, in this document. The same applies analogously to the method of operating a series resonant converter with regard to the series resonant converter.

The switch configuration can be electrically connected to an intermediate circuit, in particular on its input side, in order to carry out a transfer between an intermediate circuit DC voltage of the intermediate circuit and the port voltage by switching the switches of the switch configuration. The intermediate circuit can have an intermediate circuit DC voltage source for generating the intermediate circuit DC voltage. Usually, the switch configuration is electrically coupled to the series resonant circuit, especially on its output side, so that the port voltage is applied to the series resonant circuit. The transformer, in particular transformer port, is typically coupled, especially electrically coupled, to the series resonant circuit to perform electrical power transfer with, in particular to or from, one or more of the other ports via the transformer. In this regard, a resonant circuit AC voltage of the series resonant circuit may be transmitted, in particular transmitted transformed, with the transformer. In at least one of the ports, the switch configuration may be formed with a full bridge circuit. In at least one of the ports, the switch configuration may be formed with a half bridge circuit and a control switch, in particular as detailed in this document, especially above. Typically, the full bridge circuit is formed with two half bridge circuits, wherein the half bridge circuits are each electrically connected to the intermediate circuit of the port, and wherein the series resonant circuit is electrically connected between the switches of the respective half bridge circuit. The transformer port may be electrically connected in series with the series resonant circuit. At least one, in particular a plurality, preferably all, of the ports may be so formed. The switches of the respective switch configuration can be formed with transistors, in particular with metal-oxide-semiconductor field-effect transistors (MOSFET). This applies to at least one, in particular several, preferably all, of the ports.

A charger, in particular a charger for an electric vehicle, may be provided, wherein the charger comprises a series resonant converter as described in this document. The charger may be implemented as part of the electric vehicle. The charger may be configured to transfer electrical power to an energy storage device of the electric vehicle. The charger may be an on-board charger.

A battery cell tester may be provided, wherein a plurality of electrical energy storage devices, in particular batteries or accumulators, are arranged in the battery cell tester to test their electrical performance, wherein the battery cell tester comprises a series resonance converter as described in this document to perform an electrical power transfer between the energy storage devices with the series resonance converter.

Preferably, a use of a method for operating a series resonant converter as described in this document and/or a series resonant converter as described in this document is provided to transmit electrical power to an electric vehicle. In this way, electrical power can be transmitted to the electric vehicle with high efficiency, in particular as described above.

The skilled person understands that the voltages described in this document, in particular AC voltages and/or DC voltages, in particular port voltages and/or intermediate circuit DC voltages, are usually electrical quantities. A coupling and/or connection of electrical and/or electronic components described in this document usually refers to an electrical coupling and/or electrical connection, in particular for the transmission of an electrical quantity, in particular an electrical voltage and/or an electrical current. An electrical power transmission may refer to a transmission of an electrical active power and/or electrical reactive power.

The invention will now be described by way of example with reference to the accompanying drawings, in which:
Fig. 1 shows a schematic diagram of a three-port series resonant converter;
Fig. 2 shows a circuit diagram of a three-port series resonant converter with full bridge circuits as switch configurations;
Fig. 3 shows a voltage-time diagram with port voltages of ports with duty cycle of 50%;
and Fig. 4 shows a voltage-time diagram with port voltages of ports with duty cycle less than 50%;
Fig. 5 shows an illustration of an efficiency comparison for different electrical power transfers between ports;
Fig. 6 to Fig. 9 illustrate a setting of a duty cycle in a port, wherein Fig. 6 shows a section of a port and Fig. 7 to Fig. 9 show different time switching periods of the switches of the port for setting a respective duty cycle together with a respective resulting port voltage;
Fig. 10 shows a schematic diagram of another three-port series resonant converter;
Fig. 11 to Fig. 13 illustrate a setting of a duty cycle in a port, wherein Fig. 11 shows a section of a port and Fig. 12 and Fig. 13 show different time switching periods of the switches of the port for setting a respective duty cycle together with a respective resulting port voltage.

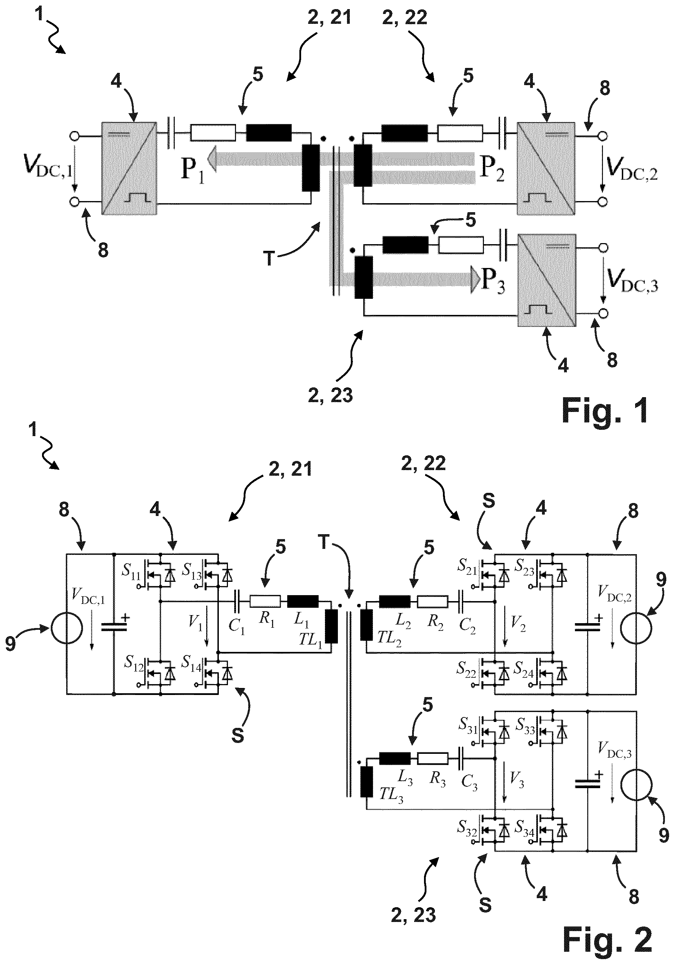

Fig. 1 shows a schematic diagram of a series resonant converter 1 with a plurality of ports 2, for example a first port 21, a second port 22 and a third port 23. The ports 2 are coupled together via a transformer T for electrical power transfer. The ports 2 each have a switch configuration 4, a series resonant circuit 5, and a transformer terminal TLₙ of the transformer T. The specified index n in the reference signs of a component, where n = 1, 2 or 3, denotes a positioning of the component in the first port (n = 1), second port (n = 2) or third port (n = 3). The switch configuration 4 is formed with a plurality of switches S, specified denoted by Sₙ₁, Sₙ₂, Sₙ₃, Sₙ₄. Typically, the respective port has an intermediate circuit 8 with a DC voltage source 9, wherein the intermediate circuit 8 is electrically coupled to the switch configuration 4 so that an electrical DC voltage V_{DC,n} of the DC voltage source 9 is applied to the switch configuration 4, in particular its input. The DC voltage V_{DC,n} is also referred to as intermediate circuit DC voltage. With switching of the respective switch configuration 4, in particular its switches Sₙ₁, Sₙ₂, Sₙ₃, Sₙ₄, a port voltage Vₙ present at the output of the switch configuration 4 can be controlled, in particular generated and/or adjusted, in the respective port 2. In the respective port 2, inputs of the series resonant circuit 5 are electrically connected to the output of the switch configuration 4, so that the respective port voltage Vₙ is present at the inputs of the series resonant circuit 5. The respective series resonant circuit 5 is usually formed with a resonant circuit capacitor Cₙ, a resonant circuit coil Lₙ and often a resonant circuit resistor Rₙ, which are electrically connected in series. The series resonant circuit 5 is electrically connected in series with the respective transformer terminal TLₙ. In this way, the series resonant circuits 5 of the ports 2 are usually inductively coupled to each other via the transformer T. The transformer T typically defines a transformer transformation ratio between each two of the ports 2, according to which AC voltages of the ports 2 applied to the transformer T are transformed by the transformer T between the ports 2. The respective transformer T terminal usually has a transformer coil to inductively perform an electrical voltage transformation between the transformer coils of the transformer T terminals. In particular, the series resonant circuit 5 may have more than three ports 2 coupled together as described.

The DC voltage sources 9 of the intermediate circuits 8 of the ports 2 usually have different DC voltages V_{DC,n} from each other. For example, the DC voltage source 9 in the first port 21 may have a DC voltage V_{DC,1} of 400 V, the DC voltage source 9 the second port 22 may have a DC voltage V_{DC,2} of 250 V, and the DC voltage source 9 in the third port 23 may have a DC voltage V_{DC,3} of 70 V. With electrical power transfer between the ports 2, electrical power can be transferred between the DC voltage sources 9 of the ports 2. For example, a DC voltage source 9 of one of the ports 2 can be used to electrically charge the DC voltage sources 9 of one or more of the other ports 2.

Typically, one of the ports 2 functions as a primary port and one or more of the other ports 2 function as secondary ports to transfer electrical power from the primary port to the one or more secondary ports. Exemplary electrical power transmission from the second port 22 to the first port 21 and the third port P23 is shown in Fig. 1. The second port 22 may then function as a primary port, and the first port 21 and the third port P23 may each function as secondary ports.

Fig. 2 shows a circuit design of a series resonant converter 1 with three ports 2, where the switch configuration 4 in the respective port 2 is implemented with a full bridge circuit. The series resonant converter 1 of Fig. 2 can be the series resonant converter 1 of Fig. 1, in particular with corresponding features and effects. The respective full bridge circuit is formed with a first switch Sₙ₁, a second switch Sₙ₂, a third switch Sₙ₃ and a fourth switch Sₙ₄. The first switch Sₙ₁ and the second switch Sₙ₂ are arranged in series and form a first bridge branch. The third switch Sₙ₃ and the fourth switch Sₙ₄ are arranged in series and form a second bridge branch. The first bridge branch and the second bridge branch are electrically connected in parallel to each other and in parallel to the DC voltage V_{DC,n} or DC voltage source 9 of the intermediate circuit 8. Thus, the DC voltage V_{DC,n} of the intermediate circuit 8 is applied to the respective bridge branch. The bridge branches each have a connection point between the switches Sₙ₁, Sₙ₂, Sₙ₃, Sₙ₄, with respectively one input of the series resonant circuit 5 being electrically connected to one of the connection points. The port voltage Vₙ of the port 2 can be measured between the connection points. With alternate switching of the switches Sₙ₁, Sₙ₂, Sₙ₃, Sₙ₄, a transfer can be implemented between the DC voltage V_{DC,n} applied to the respective full bridge circuit and the respective port voltage Vₙ. Typically, the switches Sₙ₁, Sₙ₂, Sₙ₃, Sₙ₄ of the respective bridge branch are switched on alternately, with respectively one of the switches Sₙ₁, Sₙ₂ of the first bridge branch and one of the switches Sₙ₄, Sₙ₃ of the second bridge branchbeing switched on temporally overlapping each other,wherein these switches are electrically coupled to different poles of the DC voltage V_{DC,n} of the intermediate circuit 8. For example, the first switch Sₙ₁ and the fourth switch Sₙ₄ may beswitched on temporally overlapping each other, and the second switch Sₙ₂ and the third switch Sₙ₃ may beswitched on temporally overlapping each other. The switches Sₙ₁, Sₙ₂, Sₙ₃, Sₙ₄ can be switched phase-shifted with respect to each other, and in particular with a drive frequency, such that the port voltage Vₙ in the respective port has a certain duty cycle. The drive frequency of the switches Sₙ₁, Sₙ₂, Sₙ₃, Sₙ₄ usually determines a frequency of the port voltage Vₙ.

The series resonant converter 1 can be operated such that at least in one of the ports 2 the duty cycle of the port voltage Vₙ is less than 50%, in particular between 10% and 45%. In particular, the duty cycle can be varied in these ranges. In this way, electrical power transfer between the ports 2, in particular their intermediate circuits 8 or DC voltage sources 9, can be performed with high energy efficiency. This is especially the case in a partial load operation of the series resonant converter 1. The duty cycle can be adjusted, in particular varied, depending on the electrical power transfer between the ports 2.

It is particularly advantageous if the duty cycle is set such that the voltage-time areas of the port voltages Vₙ of several, in particular all, of the ports 2 are essentially equal, taking into account a respective transformer transformation ratio of the transformer T, which is usually defined by the transformer T between the ports 2. For this purpose, the duty cycle of the port voltages Vₙ of one or more of the ports 2 may be set to less than 50%. Typically, the voltage-time area of a port voltage Vₙ in a voltage-time diagram is defined as the area between a port voltage curve and a zero line of the voltage-time diagram within one period of the port voltage Vₙ.

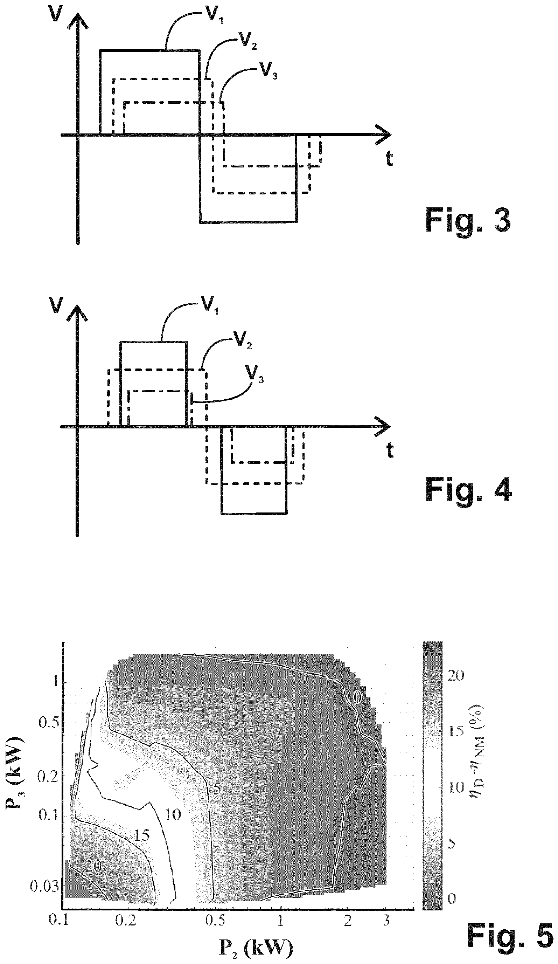

Fig. 3 and Fig. 4 show exemplary voltage-time diagrams of the port voltages V₁, V₂, V₃ of the three ports 2 of the series resonant converter 1 of Fig. 1 and/or Fig. 2, where the respective port voltage Vₙ is given as a function of time. There is shown respectively one period of the port voltage Vₙ or respectively a port voltage Vₙ controlled with a switching period of the respective switching configuration 4. Fig. 3 shows port voltages V₁, V₂, V₃ of the three ports 2 as a function of time, with the respective port voltage Vₙ having a duty cycle of 50%. This usually corresponds to a full load operation of the series resonant converter 1. Fig. 4 shows the port voltages V₁, V₂, V₃ of the three ports 2 as a function of time, wherein two of the port voltages, port voltages V₁ and V₃, have a duty cycle of less than 50%, and port voltage V₃ has a duty cycle of 50%. This usually corresponds to a partial load operation of the series resonant converter 1. The port voltages Vₙ are preferably set in such a way that the voltage-time areas of the port voltages Vₙ in several, in particular all, of the ports 2 are essentially equal, taking into account a respective transformer transformation ratio of the transformer T.

Fig. 5 shows an efficiency comparison for different electrical power transfers between ports 2 of the series resonant converter 1 of Fig. 1 and/or Fig. 2. The efficiency gain (in %) is shown as a function of an electrical power flow P₂ in the second port 22 and an electrical power flow P₃ in the third port 23 when the duty cycles of the port voltages Vₙ are adjusted. The electrical power flow P₁ of the first port 21 is the sum of the electrical power flows P₂, P₃ of the first port 21 and second port 22. The efficiency gain is shown with respect to an efficiency at a duty cycle of 50% in the respective port 2. The efficiency curve with an efficiency gain of 0 % corresponds to an electrical power transfer at duty cycles of 50 %. The duty cycles of the port voltages Vₙ are adjusted in each case so that the voltage-time areas of the port voltages Vₙ of the three ports 2 are essentially equal, taking into account a respective transformer transformation ratio of the transformer T. Highlighted in Fig. 5 are several efficiency curves with an efficiency gain greater than 0%. The smaller an electrical power transfer, in particular an electrical power flow P₂ in the second port 22 and the third port 32, the greater the efficiency gain with correspondingly adjusted duty cycles.

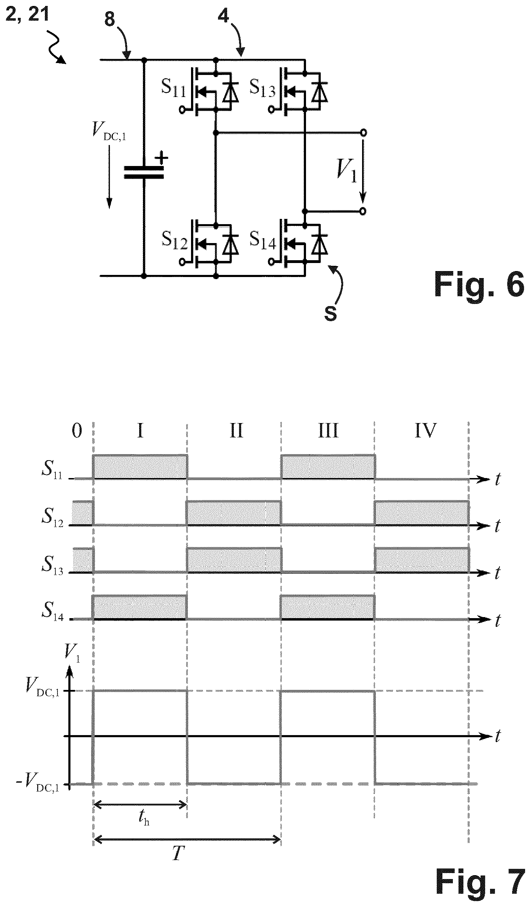

Fig. 6 shows a section of a circuit diagram of a port 2 of a series resonant converter 1, wherein the port 2 has a switch configuration 4 formed with a full bridge circuit. The port may be one of the ports 2 of the series resonant converter 1 of Fig. 1 or Fig. 2 and/or formed in accordance therewith. The port 2 may be formed as described above with respect to Fig. 2. The full bridge circuit is formed with a first switch S₁₁, a second switch S₁₂, a third switch S₁₃, and a fourth switch S₁₄. The first switch S₁₁ and the second switch S₁₂ are arranged in series to form a first bridge branch. The third switch S₁₃ and the fourth switch S₁₄ are arranged in series and form a second bridge branch. The first bridge branch and the second bridge branch are electrically connected in parallel with each other and respectively electrically connected in parallel with the DC voltage V_{DC,1} and/or DC voltage source 9 of the intermediate circuit 8. As a result, the DC voltage V_{DC,1} of the intermediate circuit 8 is applied to the respective bridge branch. The first switch S₁₁ and the third switch S₁₃ are electrically coupled to the same pole of the DC voltage V_{DC,1}, and the second switch S₁₂ and the fourth switch S₁₄ are electrically coupled to the other pole of the DC voltage V_{DC,1}. The bridge branches each have a connection point between the switches S₁₁, S₁₂, S₁₃, S₁₄, and the port voltage V₁ can be measured between the connection points. Typically, a series resonant circuit 5 is electrically connected between the connection points. Usually, the switches S₁₁, S₁₂, S₁₃, S₁₄ in the respective bridge branch are switched alternately, so that a transfer between the DC voltage V_{DC,1} applied to the full bridge circuit and the port voltage V₁ is implemented.

In general, the first switch S₁₁ and the fourth switch S₁₄ are switched on temporally overlapping each other, and the second switch S₁₂ and the third switch S₁₃ are switched on temporally overlapping each other. The switches S₁₁, S₁₂, S₁₃, S₁₄ can be switched phase-shifted to each other, and in particular with a drive frequency, such that the port voltage V₁ in the respective port 2 has a predetermined duty cycle and/or a duty cycle of the port voltage V₁ can be adjusted. The drive frequency of the switches S₁₁, S₁₂, S₁₃, S₁₄ usually determines a frequency of the port voltage V₁. The port voltage V₁ is an alternating electrical voltage. Typically, pulses of the port voltage V₁ are substantially rectangular in shape. Usually, the absolute value of the amplitudes of the port voltage V₁ is equal to the DC voltage V_{DC,1} of the intermediate circuit 8.

The duty cycle is usually defined as the ratio of a pulse duration tₕ of a pulse of the port voltage V₁ to a period duration T of the port voltage V₁. The duty cycle can be adjusted depending on a temporal switching sequence of the switches S₁₁, S₁₂, S₁₃, S₁₄. To generate a port voltage V₁ with a certain duty cycle, the respective switch is usually switched periodically.

Fig. 7 to Fig. 9 show examples of different switching periods of the switches S₁₁, S₁₂, S₁₃, S₁₄ of the port 2 of Fig. 6 for setting a respective duty cycle and a respective resulting port voltage V₁. Shown are the switching periods respectively of the first switch S₁₁, second switch S₁₂, third switch S₁₃ and fourth switch S₁₄ as well as a resulting port voltage V₁ as a function of time t. The pulses of the switching periods of the respective switch S₁₁, S₁₂, S₁₃, S₁₄ represent a switched-on state of the respective switch S₁₁, S₁₂, S₁₃, S₁₄. Time half-periods 0, I, II, III and IV are indicated by dashed lines and a pulse duration tₕ of a pulse of the port voltage V₁ and a period duration T of the port voltage V₁ are indicated by arrows.

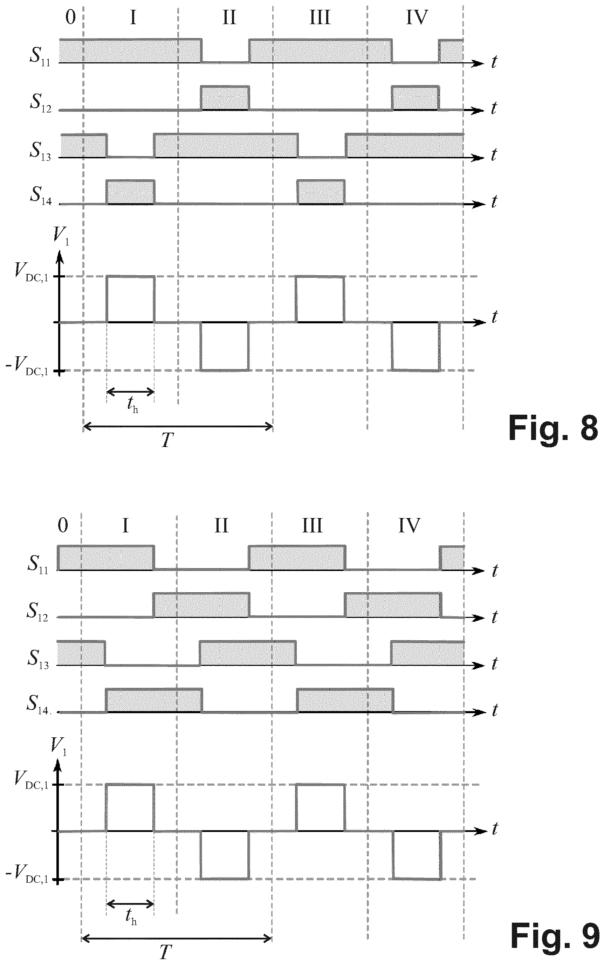

Fig. 7 shows temporal switching periods of the switches S₁₁, S₁₂, S₁₃, S₁₄ for setting a duty cycle of 50 %. This corresponds to a known implementation of the duty cycle in the prior art. Fig. 8 and Fig. 9 respectively show switching periods of the switches S₁₁, S₁₂, S₁₃, S₁₄ for setting a duty cycle of 25 %.

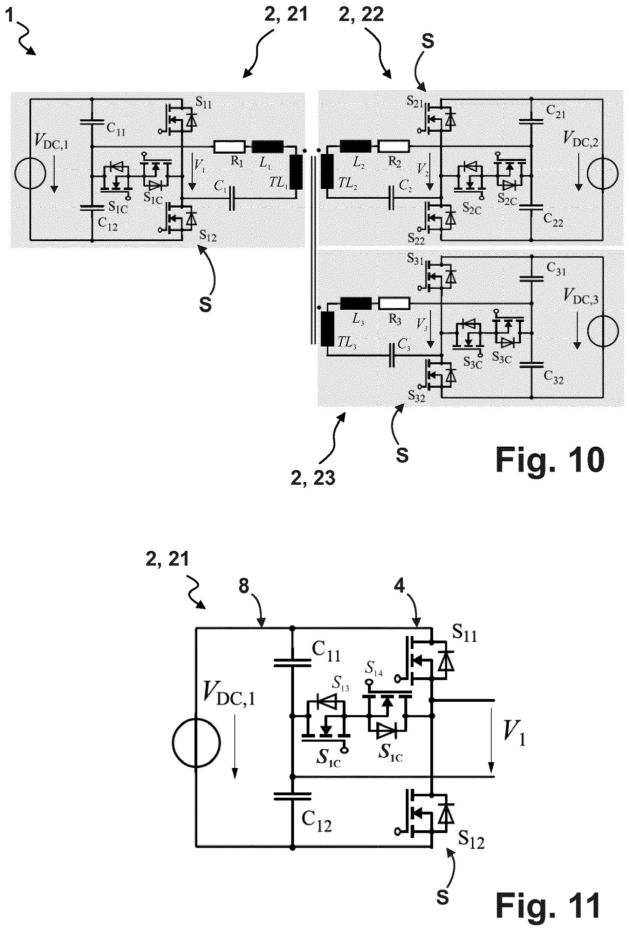

Fig. 10 shows a circuit design of a series resonant converter 1 with three ports 2, where the switch configuration 4 in the respective port 2 is implemented with a half bridge circuit and a control switch S_{1C}, S_{2C} S_{3C}. The series resonant converter 1 of Fig. 10 can be the series resonant converter 1 of Fig. 1, in particular with corresponding features and effects. The half bridge circuit is formed with a first switch Sₙ₁, and a second switch Sₙ₂.The first switch Sₙ₁ and the second switch Sₙ₂ are arranged in series and form a bridge branch. The port has a capacitor branch formed with two capacitors Cₙ₁, Cₙ₂ arranged in series. The bridge branch and the capacitor branch are electrically connected in parallel to each other and in parallel to the DC voltage V_{DC,n} or DC voltage source 9 of the intermediate circuit 8. Thus, the DC voltage V_{DC,n} of the intermediate circuit 8 is applied to the bridge branch and to the capacitor branch. The bridge branch has a first connection point between its switches Sₙ₁, Sₙ₂ and the capacitor branch has a first connection point between its capacitors, with respectively one input of the series resonant circuit 5 being electrically connected to one of the connection points. The port voltage Vₙ of the port 2 can be measured between the first connection points. The bridge branch has a second connection point between its switches Sₙ₁, Sₙ₂ and the capacitor branch has a second connection point between its capacitors Cₙ₁, Cₙ₂, with respectively one input of the control switch being electrically connected to one of the second connection points. The control switch S_{nC} is implemented by two unidirectional control switches S_{nC}, Sₙ₃, Sₙ₄ which are antiserially connected to each other. The unidirectional control switches can be unidirectional control transistors. With alternate switching of the switches Sₙ₁, Sₙ₂, S_{nC}, a transfer can be implemented between the DC voltage V_{DC,n} of the respective intermediate circuit 8 and the respective port voltage Vₙ. Typically, the switches Sₙ₁, Sₙ₂ of the bridge branch as well as usually the control switch S_{nC} are switched on alternately, wherein typically with switching on the control switch S_{nC}, in particular its switches, a zero voltage of the port voltage Vₙ is set. Typically, the respective port voltage Vₙ has, usually periodically, time ranges t₀, with a constant zero voltage.

For example, the first switch Sₙ₁ and the second switch Sₙ₂ of the half-bridge circuit can be switched to a switched-on state alternately and not overlapping in time, in particular spaced apart in time, wherein respectively between the switched-on states the control switch S_{nC} is switched on. The control switch can be switched on non-overlapping in time with a switched-on state of the first switch Sₙ₁ and non-overlapping in time with a switched-on state of the second switch Sₙ₂. The switches Sₙ₁, Sₙ₂, S_{nC} can be switched phase-shifted with respect to each other, and in particular with a drive frequency, such that the port voltage Vₙ in the respective port has a certain duty cycle. The drive frequency of the switches Sₙ₁, Sₙ₂, S_{nC} usually determines a frequency of the port voltage Vₙ. An operation of the series resonance converter 1 and/or an adjustment of a duty cycle can be implemented as described to Fig. 2. Features and effects of the series resonance converter 1 of Fig. 10 can be present in an analogous manner as described for Fig. 1 to Fig. 5.

Fig. 11 shows a section of a circuit diagram of a port 2 of a series resonant converter 1, wherein the port 2 has a switch configuration 4 formed with a half bridge circuit. The port may be one of the ports 2 of the series resonant converter 1 of Fig. 10 and/or formed in accordance therewith. The half bridge circuit is formed with a first switch S₁₁ and a second switch S₁₂. The control switch S_{1C} is implemented with two antiserially arranged unidirectional control transistors. Usually, the first switch S₁₁, the second switch S₁₂ and the control switch S_{1C} are switched such that their switch-on states do not overlap each other. The switches S₁₁, S₁₂, S_{1C} can be switched phase-shifted to each other, and in particular with a drive frequency, such that the port voltage V₁ in the respective port 2 has a predetermined duty cycle and/or a duty cycle of the port voltage V₁ can be adjusted. The drive frequency of the switches S₁₁, S₁₂, S_{1C} usually determines a frequency of the port voltage V₁. The port voltage V₁ is an alternating electrical voltage. Typically, pulses of the port voltage V₁ are substantially rectangular in shape. Usually, the absolute value of the amplitudes of the port voltage V₁ is equal to one half of the DC voltage V_{DC,1} of the intermediate circuit 8.

The duty cycle is usually defined as the ratio of a pulse duration tₕ of a pulse of the port voltage V₁ to a period duration T of the port voltage V₁. The duty cycle can be adjusted depending on a temporal switching sequence of the switches S₁₁, S₁₂, S_{1C}. To generate a port voltage V₁ with a certain duty cycle, the respective switch is usually switched periodically. Typically, the port voltage V₁ has a time range t₀ with a constant zero voltage within the period duration T, preferably within a half period duration T, of the port voltage V₁.

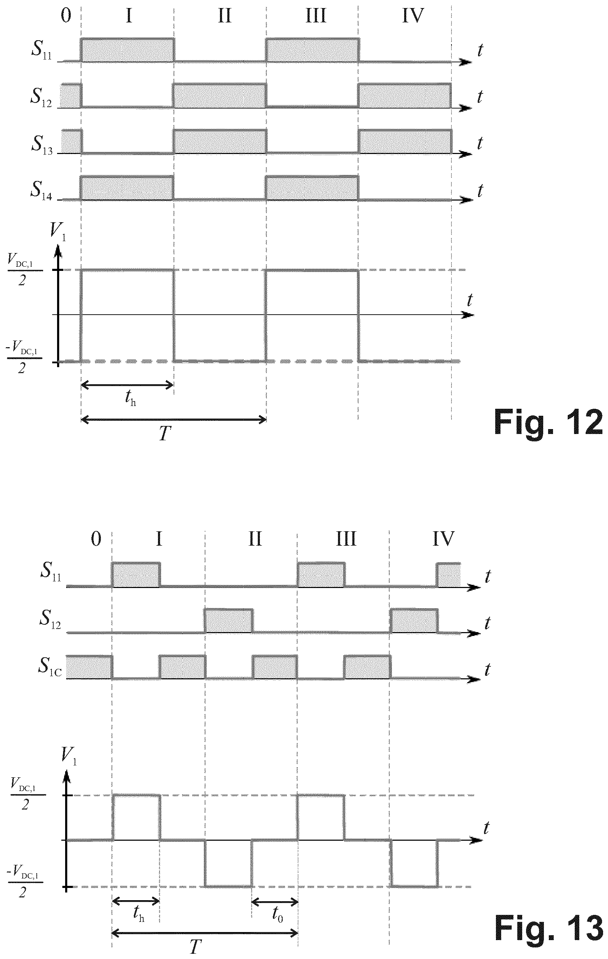

Fig. 12 and Fig. 13 show examples of different switching periods of the switches S₁₁, S₁₂, S_{1C} of the port 2 of Fig. 11 for setting a respective duty cycle and a respective resulting port voltage V₁. Shown are the switching periods respectively of the first switch S₁₁, the second switch S₁₂ and the control switch S_{1C} as well as a resulting port voltage V₁ as a function of time t. The pulses of the switching periods of the respective switch S₁₁, S₁₂, S_{1C}, S₁₃, S₁₄ represent a switched-on state of the respective switch S₁₁, S₁₂, S_{1C}, S₁₃, S₁₄. Time half-periods 0, I, II, III and IV are indicated by dashed lines and a pulse duration tₕ of a pulse of the port voltage V₁ and a period duration T of the port voltage V₁ are indicated by arrows.

Fig. 12 shows temporal switching periods of the switches S₁₁, S₁₂, S₁₃, S₁₄ for setting a duty cycle of 50 %. Fig. 13 shows switching periods of the switches S₁₁, S₁₂, S_{1C} for setting a duty cycle of 25 %.

In this way, by adjusting, in particular varying, the duty cycle of the port voltage Vₙ in a range less than 50% in at least one, preferably a plurality, of the ports 2, a high efficiency of an electrical power transfer of the series resonant converter 1 can be achieved.

## Claims

1. Method of operating a series resonant converter (1), the series resonant converter (1) having a plurality of ports (2), the ports (2) being coupled together with a transformer (T) for transferring electrical power between the ports (2), the ports (2) each having a switch configuration (4) formed with a plurality of switches (S), a series resonant circuit (5) and a transformer terminal of the transformer (T) for controlling a port voltage (V₁, V₂, V₃) applied to the series resonant circuit (5) with switching of the switch configuration (4), **characterized in that**, in particular in partial load operation, at least one of the ports (2) is operated with a duty cycle of less than 50 %.

2. Method according to claim 1, wherein the series resonant converter (1) has at least three ports (2).

3. Method according to claim 1 or 2, wherein the duty cycle of at least one of the ports (2) is varied to control the series resonant converter (1).

4. Method according to any one of the claims 1 to 3, wherein for the realization of the duty cycle the switch configuration (4) of the respective port (2) is switched such that the port voltage (V₁, V₂, V₃) is temporarily a constant zero voltage.

5. Method according to any one of the claims 1 to 4, wherein the duty cycle is adjusted such that voltage-time areas of the port voltages (V₁, V₂, V₃) of a plurality of the ports (2) are substantially equal, taking into account a respective transformer turns ratio of the transformer (T).

6. Method according to any one of the claims 1 to 5, wherein the duty cycle and a frequency and/or a phase of the port voltage (V₁, V₂, V₃) in at least one of the ports (2) is varied to control the power transfer.

7. Method according to any one of the claims 1 to 6, wherein, for controlling power transfer in at least one of the ports (2), the duty cycle is varied and a port voltage frequency is kept substantially constant.

8. Method according to any one of the claims 1 to 7, wherein in at least one of the ports (2) the switch configuration (4) is formed with a half bridge circuit.

9. Method according to any one of the claims 1 to 8, wherein in at least one of the ports (2) the switch configuration (4) is formed with a full bridge circuit, wherein the full bridge circuit is formed with two half bridge circuits each electrically connected to an intermediate circuit DC voltage (V_{DC,1 to 3}) of the port (2), wherein the series resonant circuit (5) is electrically connected between the half bridges.

10. Method according to any one of the claims 1 to 8, wherein in at least one of the ports (2) the switch configuration (4) is formed with a half bridge circuit and a control switch (S_{1C}, S_{2C}, S_{3C}), in particular a bidirectional control switch, wherein the half bridge circuit is electrically connected to an intermediate circuit DC voltage (V_{DC,1 to 3}) of the port (2), wherein the series resonant circuit (5) is electrically connected between the half bridge and the control switch.

11. Method according to any one of the claims 1 to 10, wherein, in an adjustment phase of the series resonant converter (1), the duty cycle is varied in at least one of the ports (2) until substantially no power transfer takes place between a plurality of the ports (2) and, following the adjustment phase, power transfer is controlled with variation of a switching frequency and/or a phase of the port voltage (V₁, V₂, V₃) in at least one of the ports (2).

12. Method according to any one of the claims 1 to 11, wherein, in particular depending on a power transmission, a change is made between a first operating mode and a second operating mode, wherein in the first operating mode in at least one of the ports a duty cycle smaller than 50 % and/or a variation of the duty cycle is applied, and in the second operating mode a respective duty cycle in the ports (2) is 50 %.

13. Series resonant converter (1), in particular for carrying out a method according to any one of the claims 1 to 12, wherein the series resonant converter (1) comprises a plurality of ports (2) being coupled to each other via a transformer (T) for electrical power transfer between the ports (2), the ports (2) each comprising a switch configuration (4) formed with a plurality of switches (S), a series resonant circuit (5) and a transformer terminal of the transformer (T) for respectively controlling a port voltage (V₁, V₂, V₃) applied to the series resonant circuit (5) with switching of the switch configuration (4), **characterized in that** a control device for controlling the series resonant converter (1) is configured, in particular in partial load operation, to operate at least one of the ports (2) with a duty cycle of less than 50 %.

14. Series resonant converter (1) according to claim 13, wherein in at least one of the ports (2) the switch configuration (4) is implemented with a full bridge circuit formed with two half bridge circuits, wherein the half bridge circuits are each electrically connected to an intermediate circuit (8) of the port, and wherein the series resonant circuit (5) is electrically connected between switches (S) of the respective half bridge circuit.

15. Use of a method according to any one of the claims 1 to 12 and/or a series resonant converter (1) according to any one of the claims 13 or 14 to transmit electrical power to an electric vehicle.
